(19) Europäisches Patentamt

European Patent Office

Office européen des brevets

(11) Veröffentlichungsnummer : **0 349 751 B1**

(12) **EUROPÄISCHE PATENTSCHRIFT**

(45) Veröffentlichungstag der Patentschrift :
**19.02.92 Patentblatt 92/08**

(21) Anmeldenummer : **89109566.3**

(22) Anmeldetag : **26.05.89**

(51) Int. Cl.$^5$ : **B60T 17/22**, B60T 13/66

(54) **Notbremseinrichtung für indirekt wirkende Druckluftbremse.**

(30) Priorität : **07.07.88 CH 2598/88**

(43) Veröffentlichungstag der Anmeldung :
**10.01.90 Patentblatt 90/02**

(45) Bekanntmachung des Hinweises auf die
Patenterteilung :
**19.02.92 Patentblatt 92/08**

(84) Benannte Vertragsstaaten :
**AT BE CH DE ES FR GB IT LI NL**

(56) Entgegenhaltungen :
**EP-A- 0 105 118**
**EP-A- 0 215 206**
**FR-A- 2 252 237**
**FR-A- 2 348 837**
**FR-A- 2 449 574**

(73) Patentinhaber : **Oerlikon-Knorr**
**Eisenbahntechnik AG**
**Birchstrasse 155**
**CH-8050 Zürich (CH)**

(72) Erfinder : **Fischer, Pius**
**Ifangstrasse 70**
**CH-8153 Rümlang (CH)**

(74) Vertreter : **Hunziker, Kurt**
**c/o Werkzeugmaschinenfabrik**
**Oerlikon-Bührle AG Patentbüro Birchstrasse**
**155**
**CH-8050 Zürich (CH)**

EP 0 349 751 B1

Jouve, 18, rue Saint-Denis, 75001 PARIS

## Beschreibung

Notbremseinrichtung für indirekt wirkende Druckluftbremse.

Die Erfindung betrifft eine Notbremseinrichtung für eine indirekt wirkende Druckluftbremse von Schienenfahrzeugen,
– mit einer Speiseleitung und einer Hauptluftleitung, welche durch sämtliche Fahrzeuge eines Zuges führen;
– mit einem Führerbremsventil, zum Steuern des Druckes in der Hauptluftleitung;
– mit einer Strömungsmesseinrichtung, zum Anzeigen einer aussergewöhnlichen Entlüftung der Hauptluftleitung, z.B. durch ein Handnotbremsventil;
– mit einem Relaisventil zum Füllen der Hauptluftleitung aus der Speiseleitung und zum Entlüften der Hauptluftleitung in die Atmosphäre;
– mit einem Servoelektroventil zwischen Speiseleitung und Relaisventil; und
– mit einer Drossel parallel zum Servoelektroventil, um Druckverluste in der Hauptluftleitung auszugleichen.

Bei einer bekannten Bremseinrichtung für Schienenfahrzeuge dieser Art (siehe DE-A-3 006 279) erstreckt sich die Bremsleitung entlang eines Zuges von einem Fahrzeug zu einem anderen Fahrzeug, wobei jedes der aufeinanderfolgenden Fahrzeuge ein Bremsventil besitzt, um die Bremsen beim Ansprechen auf Druckänderungen in der Bremsleitung zu steuern. Es ist eine Warneinrichtung vorhanden, welche in Abhängigkeit von der Strömung in der Bremsleitung wirksam wird. Diese Einrichtung besitzt

a) einen Fühler, der eine sich erhöhende oder bereits erhöhte Strömung feststellt,

b) eine Einrichtung, die auf den Fühler anspricht, um eine Warneinrichtung zu betätigen, welche die erhöhte Strömung anzeigt,

c) eine auf Druck ansprechende Einrichtung, die auf den sich ändernden Bremsdruck - wie er sich während des Lösens der Bremse ergibt - anspricht, und

d) eine Sperr- bzw. Verhinderungseinrichtung, die von der auf Druck ansprechenden Einrichtung betätigbar ist, um die Warneinrichtung daran zu hindern, während eines solches Lösens der Bremsen eine Warnung zu geben.

Diese bekannte Bremseinrichtung hat den Nachteil, dass zusätzlich eine auf Druck ansprechende Einrichtung sowie eine Sperr- bzw. Verhinderungseinrichtung erforderlich ist, damit die Warneinrichtung während eines Lösens der Bremse nicht anspricht.

Die Aufgabe, welche mit der vorliegenden Erfindung gelöst werden soll, besteht in der Schaffung einer Notbremseinrichtung, die beim Lösen der Bremse nicht anspricht, ohne dass zusätzliche Organe erforderlich sind, welche verhindern, dass die Notbremse wirksam wird, wenn die Bremse gelöst wird.

Die Notbremseinrichtung, mit der diese Aufgabe gelöst wird, ist dadurch gekennzeichnet, dass die Strömungsmesseinrichtung sowohl parallel zum Servoelektroventil, als auch parallel zur Drossel angeordnet ist, um ein Entlüften oder Füllen der Hauptluftleitung nur anzuzeigen, wenn das Servoelektroventil geschlossen ist.

Vorzugsweise weist die Strömungsmesseinrichtung einen Differenzdruckschalter auf, der die Differenz der Drücke vor und hinter der genannten Drossel misst und ein Elektrosignal erzeugt, wenn diese Differenz einen bestimmten Wert übersteigt.

Als Stand der Technik für den Oberbegriff des Anspruches 1 ist eine eigene Bremseinrichtung berücksichtigt worden, welche die Anmelderin bereits herstellt und liefert.

Ein Ausführungsbeispiel der erfindungsgemässen Notbremseinrichtung für ein Führerbremsventil ist im folgenden anhand der beigefügten Zeichnung ausführlich beschrieben. Es zeigt in schematischer Darstellung:

Fig.1 eine Führerbremsventileinrichtung;
Fig.2 ein Servoelektroventil, das stromlos geschlossen ist;
Fig.3 ein Servoelektroventil, das stromlos offen ist;
Fig.4 ein Schnellbremsventil, das stromlos offen ist;
Fig.5 ein elektropneumatisches Füllstossventil;
Fig.6 ein elektropneumatisches Löseventil;
Fig.7 ein elektropneumatisches Bremsventil.

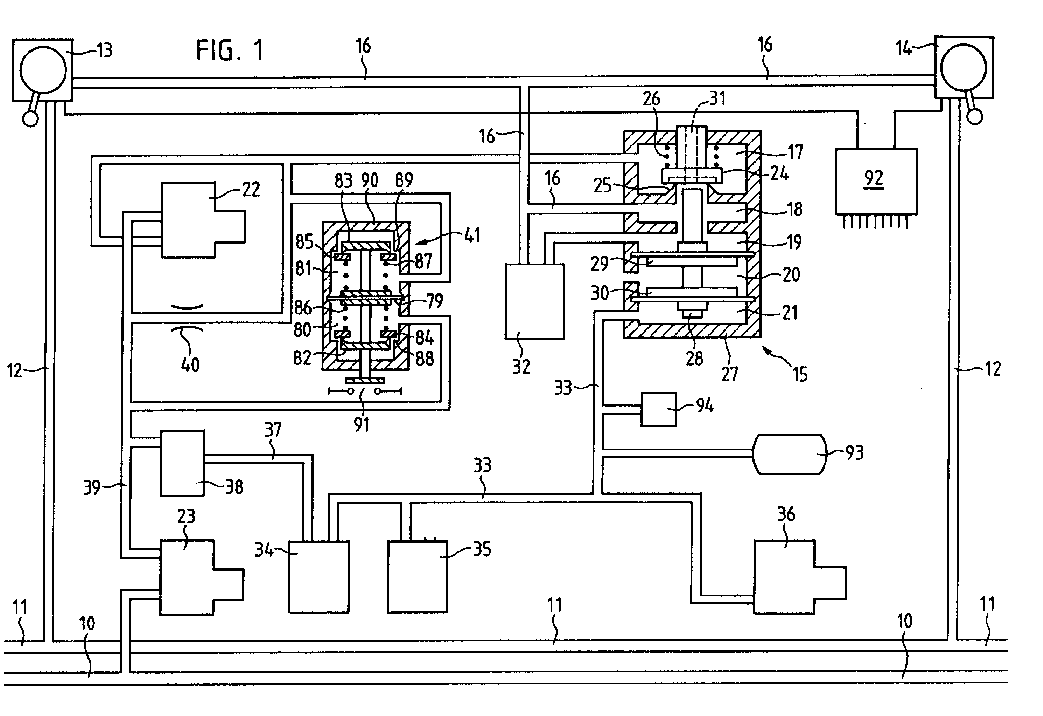

Gemäss Fig.1 weist die Bremseinrichtung eine Speiseleitung 10 und eine Hauptluftleitung 11 auf, welche durch den ganzen Zug hindurch geführt sind, d.h. durch alle Wagen des Zuges hindurch. An die Hauptluftleitung 11 sind über Zweigleitungen 12 zwei Führerventile 13 und 14 angeschlossen. Diese beiden Führerbremsventile 13,14 sind zur Steuerung eines Relaisventiles 15 über eine gemeinsame Leitung 16 mit diesem Relaisventil 15 verbunden. Das Relaisventil 15 weist fünf Kammern 17-21 auf. Die erste Kammer 17 ist über zwei Ventile

2

22 und 23 an die Speiseleitung 10 angeschlossen. Somit ist diese Kammer 17 mit Druckluft aus der Speiseleitung gefüllt, solange die erwähnten beiden Ventile 22 und 23 offen sind. Diese erste Kammer 17 ist über ein Ventil 24,25 von der zweiten Kammer 18 getrennt. Dieses Ventil besteht aus einem Ventilteller 24, der sich unter der Wirkung einer Ventilfeder 26 auf einem Ventilsitz 25 abstützt, der im Ventilgehäuse 27 des Relaisventiles 15 befestigt ist. Die zweite Kammer 18 ist über die gemeinsame Leitung 16 mit den beiden Führerbremsventilen 13,14 verbunden. Bei abgehobenem Ventilteller 24 kann die Luft aus der ersten Kammer 17 in die zweite Kammer 18 strömen; somit gelangt Luft aus der Speiseleitung 10 über die beiden Ventile 22 und 23 über das Relaisventil 15 und über die beiden Führerbremsventile 13 und 14 in die Hauptluftleitung 11. Zum Abheben des Ventiltellers 24 vom Ventilsitz 25 dient ein Stössel 28, an dem zwei Kolben 29 und 30 befestigt sind. Zwischen diesen beiden Kolben 29 und 30 befindet sich die vierte Kammer 20, welche einfach offen, d.h. mit der Atmosphäre verbunden ist. Durch die beiden Kolben 29 und 30 werden die dritte Kammer 19 und die fünfte Kammer 21 voneinander getrennt, wobei der Druck in der dritten Kammer 19 ein Schliessen des Ventiles 24,25 bewirkt, während der Druck in der fünften Kammer 21 ein Oeffnen des Ventiles 24,25 bewirkt. Dabei ist zu beachten, dass bei geschlossenem Ventil 24,25, wie aus Fig.1 ersichtlich ist, die zweite Kammer 18 über eine Bohrung 31 im Ventilteller 24 entlüftet ist, d.h. mit der Atmosphäre verbunden ist. Wenn somit der Ventilteller 24 auf dem Ventilsitz 25 aufliegt und der Stössel 28 den Ventilteller 24 nicht mehr berührt, so kann die Hauptluftleitung 11 über die beiden Zweigleitungen 12, über die beiden Führerbremsventile 13,14, über die gemeinsame Leitung 16, über die zweite Kammer 18 des Relaisventiles 15 und über die Bohrung 31 des Ventiltellers 24 entlüftet werden. Die dritte Kammer 19 ist über ein Füllstossventil 32 und über die gemeinsame Leitung 16 an die beiden Führerbremsventile 13 und 14 angeschlossen. Mit Hilfe des Füllstossventiles 32 kann die dritte Kammer 19 vollständig entlüftet werden. Somit überwiegt der Druck in der fünften Kammer 21 des Relaisventiles 15. Der Ventilteller 24 wird daher vom Ventilsitz 25 abgehoben und die Luft aus der Kammer 17 gelangt in die Kammer 18. Die fünfte Kammer 21 ist über eine Zweitleitung 33 mit einem Elektroventil 34 zum Lösen der Bremse, mit einem Elektroventil 35 zum üblichen Bremsen und mit einem Schnellbremsautomat 36 verbunden. Diese beiden Elektroventile 34 und 35 sowie der Schnellbremsautomat 36 sind über eine weitere Zweigleitung 37, über ein Rückschlagventil 38 und über eine Zweigleitung 39 an die Speiseleitung 10 angeschlossen. Mit dem Elektroventil 34 zum Lösen der Bremse kann der Druck in der fünften Kammer 21 des Relaisventiles 15 erhöht werden. Mit dem Elektroventil 35 zum Bremsen und mit dem Schnellbremsautomat 36 kann die Kammer 21 mehr oder weniger stark entlüftet werden. Parallel zum Elektroventil 22 ist eine Drossel 40 und ein Differenzdruckgeber 41 angeschlossen. Die Drossel 40 ist notwendig, um Leckverluste in der Hauptluftleitung ständig auszugleichen. Diese Drossel ist jedoch derart bemessen, dass bei grösserem Luftverlust in der Hauptluftleitung 11 der Druck in derselben absinkt. Mit dem Elektroventil 22 kann die Drossel 40 überbrückt werden, wenn mehr Luft benötigt wird, als durch die Drossel 40 strömen kann.

Im folgenden sollen die einzelnen Ventile, nämlich die beiden Elektroventile 22 und 23, das Schnellbremsventil 36, das Füllstossventil 32, das Löseventil 34 und das Bremsventil 35 beschrieben werden. Zuerst soll jedoch auf die Unterschiede dieser Ventile hingewiesen werden. Das erste Elektroventil 22 ist im stromlosen Zustand geschlossen und das zweite Elektroventil 23 ist im stromlosen Zustand offen. Mit anderen Worten, wenn das Elektroventil 22 erregt wird, öffnet es sich, und wenn das Elektroventil 23 erregt wird, schliesst es sich. Ebenso schliesst sich das Schnellbremsventil 36, wenn es erregt wird und öffnet sich bei Stromausfall. Die beiden Elektroventile 22 und 23 lassen im offenen Zustand Druckluft aus der Speiseleitung in die Kammer 17 des Relaisventiles 15 strömen und das Schnellbremsventil 36 lässt im offenen Zustand die Luft aus der Kammer 21 des Relaisventiles 15 in die Atmosphäre entweichen. Mit dem geöffneten Löseventil 34 kann Druckluft aus der Speiseleitung in die Kammer 21 des Relaisventiles 15 strömen. Mit dem geöffneten Bremsventil 35 kann genau wie beim Schnellbremsventil 36 die Luft aus der Kammer 21 des Relaisventiles 15 in die Atmosphäre entweichen.

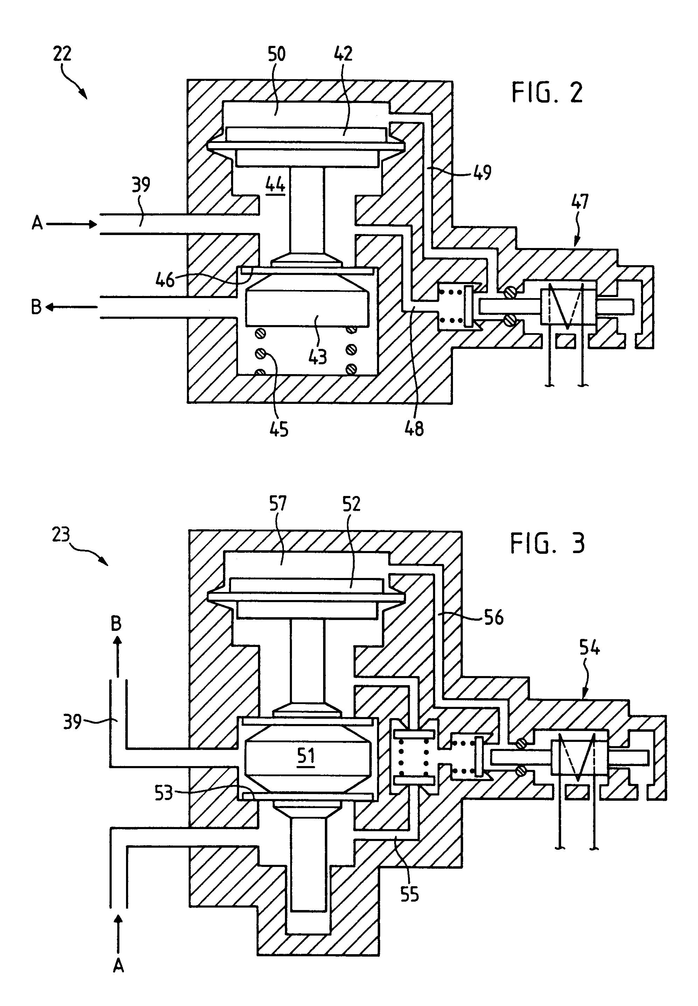

Gemäss Fig.2 weist das Servoelektroventil 22 einen Kolben 42 zur Betätigung eines Ventiltellers 43 auf. Die Druckluft gelangt in Richtung des Pfeiles A in eine Kammer 44 unterhalb des Kolbens 42 und hat das Bestreben, zusammen mit einer Feder 45 den Ventilteller 43 auf seinen Sitz 46 zu drücken und das Ventil zu schliessen. Zum Oeffnen des Ventiles 22 strömt die Luft über ein elektrisches Ventil 47 und über Leitungen 48 und 49 in eine zweite Kammer 50 oberhalb des Kolbens 42, wodurch sich das Ventil 22 öffnet und die Druckluft durch die Leitung 39 in Richtung des Pfeiles B strömen kann.

Gemäss Fig.3 weist das Servoelektroventil 23 einen doppelt wirkenden Ventilteller 51 auf, der durch einen Kolben 52 betätigbar ist. Die Druckluft gelangt in Richtung des Pfeiles A durch die Leitung 39 auf die untere Seite des Ventiltellers 51 und hat das Bestreben, den Ventilteller 51 von seinem Sitz 53 abzuheben, wodurch das Ventil 23 geöffnet ist und Druckluft in Richtung des Pfeiles B aus dem Ventil 23 durch die Leitung 39 herausströmt. Zum Schliessen des Ventiles 23 strömt die Luft über ein elektrisches Ventil 54 und über Leitungen 55 und 56 in eine Kammer 57 oberhalb des Kolbens 52, wodurch sich das Ventil 23 schliesst und keine Luft mehr in der Leitung 39 fliessen kann.

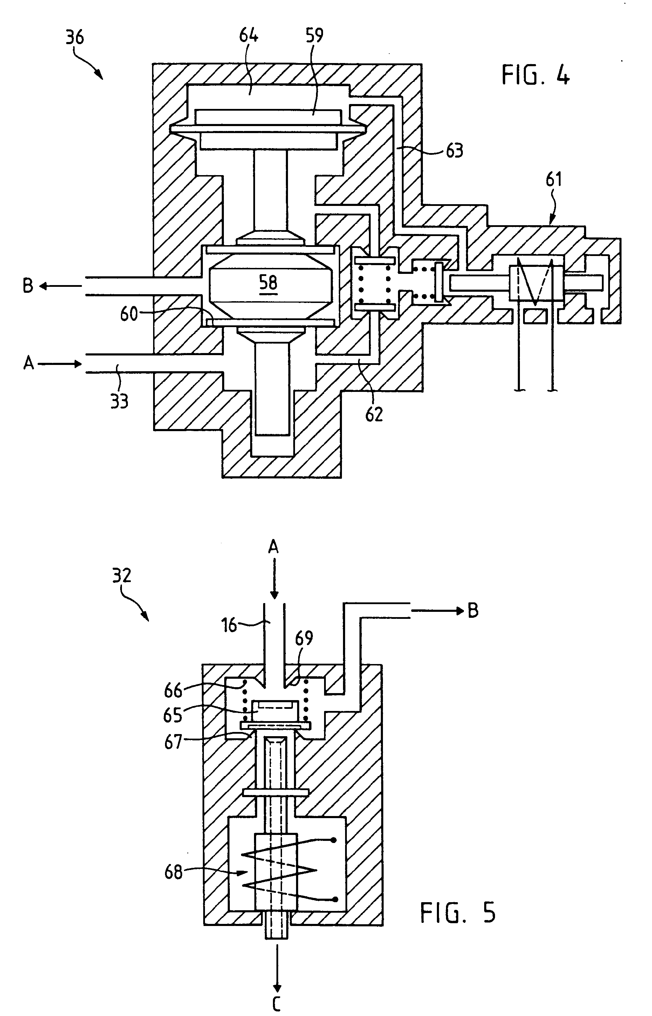

Gemäss Fig.4 weist das Schnellbremsventil 36 einen doppelt wirkenden Ventilteller 58 auf, der durch einen Kolben 59 betätigbar ist. Die Druckluft gelangt in Richtung des Pfeiles A durch die Leitung 33 auf die untere Seite des Ventiltellers 58 und hat das Bestreben, den Ventilteller 58 von seinem Sitz 60 abzuheben, wodurch das Ventil 36 geöffnet ist und Druckluft in Richtung des Pfeiles B in die Atmosphäre strömt. Zum Schliessen des Ventiles 36 strömt die Luft über ein elektrisches Ventil 61 und über Leitungen 62 und 63 in eine Kammer 64 oberhalb des Kolbens 59, wodurch sich das Ventil 36 schliesst und keine Luft mehr in die Atmosphäre fliessen kann.

Gemäss Fig.5 weist das Füllstossventil 32 einen Ventilteller 65 auf, der durch eine Feder 66 auf einen Ventilsitz 67 gedrückt wird. Das Ventil 32 ist somit offen und die Druckluft kann aus der Leitung 16 in Richtung der Pfeile A und B in die Kammer 19 des Relaisventiles 15 gelangen. Durch das elektrische Ventil 68 kann der Ventilteller 65 angehoben und gegen einen zweiten Ventilsitz 69 gedrückt werden, wodurch mit dem Ventil 32 die Leitung 16 geschlossen ist und die Luft aus der Kammer 19 des Relaisventiles 15 an dem vom Ventilsitz 67 abgehobenen Ventilteller 65 vorbei in Richtung des Pfeiles C in die Atmosphäre fliessen kann.

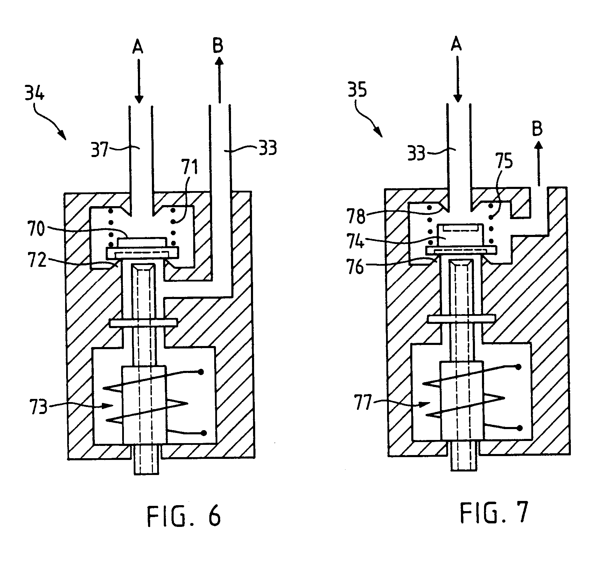

Gemäss Fig.6 weist das Löseventil 34 einen Ventilteller 70 auf, der durch eine Feder 71 auf einen Ventilsitz 72 gedrückt wird. Das Löseventil 34 ist geschlossen und Druckluft kann nicht aus Leitung 37 in Leitung 33 gelangen. Durch das elektrische Ventil 73 kann der Ventilteller 70 von seinem Ventilsitz 72 abgehoben werden, wodurch die Druckluft in Richtung der Pfeile A und B aus der Leitung 37 über die Leitung 33 in die Kammer 21 des Relaisventiles 15 gelangen kann.

Gemäss Fig.7 weist das Bremsventil 35 einen Ventilteller 74 auf, der durch eine Feder 75 auf einen Ventilsitz 76 gedrückt wird. Das Bremsventil ist somit offen und die Druckluft kann aus Leitung 33 in Richtung der Pfeile A und B in die Atmosphäre fliessen. Durch das elektrische Ventil 77 kann der Ventilteller von seinem Ventilsitz 76 abgehoben und gegen einen zweiten Ventilsitz 78 gedrückt werden, wodurch die Leitung 33 geschlossen ist.

Der Differenzdruckschalter 41, gemäss Fig.1, weist eine Membrane 79 auf, welche sich zwischen zwei Kammern 80 und 81 befindet. In der ersten Kammer 80 herrscht derselbe Druck wie in der Leitung 39 vor der Drossel 40, und in der zweiten Kammer 81 herrscht derselbe Druck wie in der Leitung 39 nach der Drossel 40. Diese Membrane 79 ist mit zwei Kolben 82 und 83 verbunden. Diese beiden Kolben 82 und 83 stützen sich auf zwei beweglichen Ringen 84 und 85 ab, die von je einer Feder 86 und 87 belastet sind. Der erste Ring 84 stützt sich auf einer Schulter 88 des Schaltergehäuses 90 ab, und der zweite Ring 85 stützt sich auf einer anderen Schulter 89 des Schaltergehäuses 90 ab. Der Kolben 82 ist mit einem elektrischen Schalter 91 verbunden, der in der gezeigten Stellung offen ist. Dieser Schalter ist so ausgebildet, dass er sich schliesst, sobald in der zweiten Kammer 81 der Druck gegenüber der ersten Kammer 80 absinkt.

Die verschiedenen elektrischen Ventile, insbesondere
a) das elektrische Ventil 47 in Fig.2 des Servoventiles 22
b) das elektrische Ventil 54 in Fig.3 des Servoventiles 23
c) das elektrische Ventil 61 in Fig.4 des Schnellbremsventiles 36
d) das elektrische Ventil 68 in Fig.5 des Füllstossventiles 32
e) das elektrische Ventil 73 in Fig.6 des Löseventiles 34 und
f) das elektrische Ventil 77 in Fig.7 des Bremsventiles 35 sind im wesentlichen ähnlich aufgebaut. Diese Ventile weisen alle einen Anker 92 auf zur Betätigung eines Ventiltellers, insbesondere der Teller 65, 70, 74 und 93. Solange diese elektrischen Ventile 47, 54, 61, 68, 73 und 77 stromlos sind, befinden sich die Ventilteller 65, 70, 74 und 93 in ihrer Ausgangslage, wie in der Zeichnung dargestellt, und sobald diese elektrischen Ventile erregt sind, werden die Ventilteller aus ihrer Ausgangslage wegbewegt.

Die Wirkungsweise der ganzen Führerbremsventileinrichtung wird als bekannt vorausgesetzt und es wird daher im folgenden nur die Wirkungsweise des Differenzdruckschalters 41 beschrieben. Dieser Differenzdruckschalter 41 wird betätigt, sobald durch die Drossel 40 mehr Luft hindurchströmen sollte, als dies der Durchtrittsquerschnitt der Drossel 40 zulässt und somit hinter der Drossel 40 ein Druckabfall entsteht, der ausreicht, der Differenzdruckschalter 41 zu betätigen, d.h. wenn die Druckdifferenz in den Kammern 80 und 81 ausreicht, um die Kolben 82 und 83 entgegen der Kraft der Federn 86 und 87 soweit zu verschieben, dass der elektrische Schalter 91 geschlossen wird. Durch Schliessen des Schalters 91 wird ein nicht dargestelltes akustisches oder optisches Warnsignal betätigt.

Im übrigen sei noch darauf hingewiesen, dass die erwähnten sechs elektrischen Ventile 47, 54, 61, 68, 73 und 77 alle an ein gemeinsames elektronisches Steuergerät 92 angeschlossen sind. An dieses elektronische Steuergerät 92 sind auch die Führerbremsventile 13 und 14 angeschlossen. Zur Vergrösserung der Kammer 21 des Relaisventiles 15 ist noch ein Steuerbehälter 93 angeschlossen sowie ein Signalwandler 94, der den Druck im Steuerbehälter 93 anzeigt.

Der Vorteil dieser Notbremsventileinrichtung besteht darin, dass bei geöffnetem Servoelektroventil 22 der Differenzdruckschalter 41 nicht ansprechen kann.

**Patentansprüche**

1. Notbremseinrichtung für indirekt wirkende Druckluftbremsen von Schienenfahrzeugen
– mit einer Speiseleitung (10) und einer Hauptluftleitung (11), welche durch sämtliche Fahrzeuge eines Zuges führen;
– mit einem Führerbremsventil (13,14) zum Steuern des Druckes in der Hauptluftleitung (11);
– mit einer Strömungsmesseinrichtung (41) zum Anzeigen einer aussergewöhnlichen Entlüftung der Hauptluftleitung (11), z.B. durch ein Handnotbremsventil;
– mit einem Relaisventil (15) zum Füllen der Hauptluftleitung (11) aus der Speiseleitung und zum Entlüften der Hauptluftleitung (11) in die Atmosphäre;
– mit einem Servoelektroventil (22) zwischen Speiseleitung (10) und Relaisventil (15) und
– mit einer Drossel (40) parallel zum Servoelektroventil, um Druckverluste in der Hauptluftleitung (11) auszugleichen;
dadurch gekennzeichnet
– dass die Strömungsmesseinrichtung (41) sowohl parallel zum Servoelektroventil (22) als auch parallel zur Drossel (40) angeordnet ist, um ein Entlüften oder Füllen der Hauptluftleitung (11) nur anzuzeigen, wenn das Servoelektroventil (22) geschlossen ist.

2. Notbremseinrichtung nach Anspruch 1, dadurch gekennzeichnet, dass die Strömungsmesseinrichtung einen Differenzdruckschalter (41) aufweist, der die Differenz der Drücke vor und hinter der genannten Drossel (40) misst und ein Elektrosignal erzeugt, wenn diese Differenz einen bestimmten Wert übersteigt.


**Claims**

1. Emergency-brake device for indirect-action compressed-air brakes of rail carriages, comprising
– a feed pipe (10) and a main air pipe (11), which extend through all carriages of a train;
– a master brake valve (13, 14) for controlling the pressure in the main air pipe (11);
– a flow-measuring device (41) for indicating extraordinary bleeding of the main air pipe (11), for example by way of a manual emergency-brake valve;
– a relay valve (15) for filling the main air pipe (11) from the feed pipe and for bleeding the main air pipe (11) into the atmosphere;
– a servo-electro valve (22) between feed pipe (10) and relay valve (15), and
– a restrictor (40) parallel with the servo-electro valve for compensating pressure losses in the main air pipe (11),
**characterised in that**
– the flow-measuring device (41) is arranged both in parallel with the servo-electro valve (22) and parallel with the restrictor (40), so as to indicate bleeding or filling of the main air pipe (11) only when the servo-electro valve (22) is shut.

2. Emergency-brake device according to claim 1, **characterised in that** the flow-measuring device comprises a differential-pressure switch (41), which measures the difference in pressures in front of and behind the restrictor (40) and produces an electrical signal when this difference exceeds a specified value.


**Revendications**

1. Dispositif de freinage d'urgence pour freins à air comprimé à action indirecte de véhicules ferroviaires comprenant :
– une conduite d'alimentation (10) et une conduite principale d'air (11) passant dans tous les véhicules d'un train,
– un robinet de frein de commande de manoeuvre manuel (13, 14) pour commander la pression dans la conduite principale d'air (11),
– un dispositif de mesure de débit (41) pour indiquer une évacuation exceptionnelle de l'air de la conduite principale d'air (11), par exemple par l'intermédiaire d'une vanne de freinage d'urgence,
– une vanne-relais (15) pour remplir la conduite principale d'air (11) à partir de la conduite d'alimentation et pour vider la conduite principale d'air (11) à l'atmosphère,
– une électrovanne d'asservissement (22) entre la conduite d'alimentation (10) et la vanne-relais (15) et,
– un organe d'étranglement (40) en parallèle à l'électrovanne d'asservissement pour compenser les pertes de pression dans la conduite principale d'air (11),

caractérisé en ce que :

– le dispositif de mesure de débit (41) est en parallèle à la fois par rapport à l'électrovanne d'asservissement (22) et à l'organe d'étranglement (40) pour n'afficher une évacuation ou un remplissage de la conduite principale d'air (11) que si l'électrovanne d'asservissement (22) est fermée.

2. Dispositif de freinage d'urgence selon la revendication 1, caractérisé en ce que le dispositif de mesure de débit comporte un interrupteur à pression différentielle (41) qui mesure la différence des pressions en amont et en aval de l'organe d'étranglement (40) et crée un signal électrique lorsque cette différence dépasse une valeur déterminée.

**FIG. 1**

FIG. 2

FIG. 3

FIG. 4

FIG. 5

FIG. 6

FIG. 7